# EUROPÄISCHE PATENTSCHRIFT

(11) **EP 1 089 812 B1**
(45) Veröffentlichungstag und Bekanntmachung des Hinweises auf die Patenterteilung: **19.03.2003**
(21) Anmeldenummer: 99924825.5
(22) Anmeldetag: 26.04.1999
(51) Int. Cl.: B01J 19/00

(54) **VORRICHTUNG ZUR ERZEUGUNG FREI DEFINIERBARER REPERTOIRES VON ELEMENTEN IN FORM VON LIGAND- UND AKZEPTORSTRUKTUREN ZUR KOMBINATORISCHEN SYNTHESE**
DEVICE FOR GENERATING FREELY DEFINABLE LIBRARIES OF ELEMENTS IN THE FORM OF LIGAND AND ACCEPTOR STRUCTURES FOR COMBINATORIAL SYNTHESIS, FOR EXAMPLE IN ACTIVE INGREDIENT RESEARCH
DISPOSITIF POUR L'ETABLISSEMENT DE REPERTOIRES LIBREMENT DEFINISSABLES D'ELEMENTS SOUS FORME DE STRUCTURES DE LIGANDS ET D'ACCEPTEURS EN VUE DE LA SYNTHESE COMBINATOIRE, PAR EXEMPLE DANS LA RECHERCHE SUR LES PRINCIPES ACTIFS

(30) Priorität: 28.04.1998 DE 19818999
(43) Veröffentlichungstag der Anmeldung: 11.04.2001
(73) Patentinhaber: Gesellschaft für Biotechnologische Forschung mbH (GBF), D-38124 Braunschweig (DE)
(72) Erfinder: FRANK, Ronald, D-38124 Braunschweig (DE); ZANDER, Norbert, D-38124 Braunschweig (DE); MELBERG, Yvonne, D-38124 Braunschweig (DE); ADLER, Frank, D-12681 Berlin (DE); GAUSEPOHL, Heinrich, D-40764 Langenfeld (DE); THOMAE, Volker, D-12489 Berlin (DE)
(74) Vertreter: Boeters, Hans Dietrich, Dr.
(86) Internationale Anmeldenummer: EP9902811
(87) Internationale Veröffentlichungsnummer: WO99055455

(56) Entgegenhaltungen:
- WO-A-97/44134
- WO-A-97/46313
- WO-A-98/01533
- WO-A-98/12559
- US-A- 5 470 710
- LEMMO A V ET AL: "CHARACTERIZATION OF AN INKJET CHEMICAL MICRODISPENSER FOR COMBINATORIAL LIBRARY SYNTHESIS" ANALYTICAL CHEMISTRY, Bd. 69, Nr. 4, 15. Februar 1997 (1997-02-15), Seiten 543-551, XP000681609 US ISSN: 0003-2700

## Beschreibung

In der biologischen Grundlagenforschung und insbesondere in der medizinischen Wirkstoffentwicklung kommt es sehr darauf an, große Anzahlen von verschiedenen Ligand- und Akzeptorstrukturen in kurzer Zeit und mit geringem Aufwand als sog. Repertoirs oder Bibliotheken erfassen zu können. Entsprechende Verfahren werden als HTS-Verfahren (HTS = High Throughput Screening) bezeichnet. Diesbezügliche Darstellungen finden sich in:
Pavia MR, Sawyer TK, Moos WH: The generation of molecular diversity. Bioorg Med Chem Lett 1993, 3:387 ff.
Gallop MA, Barrett RW, Dower WJ, Fodor SPA, Gordon EM: Applications of combinatorial technologies to drug discovery. 1. Background and peptide combinatorial libraries. J Med Chem 1994; 37:1233-1251
Gallop MA, Barrett RW, Dower WJ, Fodor SPA, Gordon EM: Applications of combinatorial technologies to drug discovery. 2. Combinatorial organic synthesis, library screening strategies, and future directions. J Med Chem 1994; 37:1385-1401
Combinatorial Peptide and Nonpeptide Libraries - A Handbook (Jung G, ed.) Weinheim: VCH 1996

Bei den betreffenden Verfahren finden gewöhnlich ebene Anordnungen (sog. Arrays) der Bibliotheken mit separaten Orten für die Einzelkomponenten oder für definierte Mischungen Verwendung, weil so die Identitäten der Einzelstrukturen durch deren Positionen im Array definiert sind und die Interaktionstests mit schnellen Pipettierrobotern durchgeführt werden können. Die Arrays können zum Beispiel durch Verteilung der Lösungen vorgefertigter Strukturen oder durch serielle Verteilung der Lösungen von Bausteinen für deren in situ Synthese erzeugt werden. Da die Effizienz des Verfahrens proportional mit der Anzahl an simultan testbaren Strukturen steigt, sind Maßnahmen zur schnelleren Herstellung und Testung solcher Arrays in möglichst miniaturisierter Form wünschenswert.

Bekannt und beschrieben sind Geräte und/oder Verfahren zur Herstellung solcher Repertoires, bei denen deren Elemente entweder in vorgegebenen Arrays aus Reaktionsgefäßen (Mikrotiderplatten, Nanotiterplatten und ähnlichen rechteckigen Anordnungen) erzeugt werden oder in Spots (Tüpfeln, Punkten) in frei formatierbaren Arrays auf der speziell aktivierten Oberfläche eines geeigneten Trägermaterials (Papier, Glas, Quarzglas, Kunststoffolie, Keramik, Folie etc.) synthetisiert werden. Dabei werden die Elemente der Repertoirs durch eine definierte chemische Verkettung einer bestimmten Anzahl von Reaktionspartnern erzeugt, die in definierter Reihenfolge aus einem vorgegebenen Pool von Substanzen ausgewählt werden. In allen bekannten Verfahren werden die Reaktionspartner seriell geladen und die Reaktionsgefäße nacheinander in einem Start-Stop-Betrieb angefahren. Erforderliche Zwischenschritte wie Reaktionsstop, Auswaschen überschüssiger Reagenzien etc. werden gesondert, teilweise auch außerhalb der Apparaturen, durchgeführt.

Der dadurch erforderliche große Zeitaufwand und die Größe und Struktur der Bibliotheksträger bedingen eine begrenzte Anzahl von Elementen in den so erzeugten Repertoires und stehen einer Erhöhung der Effizienz bei deren Anwendung entgegen.

Bekannt sind zum nämlichen Zweck Pipettiervorrichtungen, die mit x-y- oder r-φ-Bewegungen von Dosierköpfen oder der Arrayunterlage (Substrat) die vorgegebenen Positionen seriell anfahren. Dabei sind die Präzision und Geschwindigkeit begrenzt durch die Masse der jeweils zu beschleunigenden und abzubremsenden Geräteteile. Eine bekannte solche Vorrichtung ist der sog. Auto-SPOT-Robot ASP222 der Firma ABIMED Analysen Technik, Langenfeld. Hinweise auf Vorrichtungen solcher Art finden sich auch in EP 0 445 915 Al und DE 40 27 675 A1.

Kreisförmige Substrate zur Verwendung in Vorrichtungen.für quantitative und qualitative Assays sind WO 98/01 533 zu entnehmen.

Aus WO 97/44 134 ist eine Vorrichtung zur Erzeugung frei definierbarer Repertoires von Elementen in Form von Ligand- und Akzeptorstrukturen zur kombinatorischen Synthese beispielsweise in der Wirkstoffforschung bekannt, wobei die Elemente auf einem Substrat regelmäßig entlang einer ersten und einer zweiten Koordinate angeordnet und gesteuert einzeln von einem Dosierkopfhalter anfahrbar sind, der in der jeweiligen Position ein Reagenz- oder Lösungsmittel auf das jeweilige Element dosiert, wobei das Substrat die Gestalt eines um seine Rotationssymmetrieachse als Drehachse in Richtung der ersten Koordinate drehbaren Rotationskörpers besitzt und mindestens ein Dosierkopf dem Substrat gegenüber entlang der zweiten Koordinate parallel zur Oberfläche des Substrats verfahrbar und in Abhängigkeit von seiner jeweiligen Momentanposition zur Abgabe einer bestimmten Menge des betreffenden Reagenzes bzw. Lösungsmittels ansteuerbar ist.

Von dem geschilderten Stand der Technik ausgehend liegt der Erfindung die Aufgabe zugrunde, eine Vorrichtung gemäß dem Stand der Technik so auszubilden, dass sie es erlaubt, eine vergleichsweise große Zahl von Elementen eines Arrays rasch und mit hoher Präzision zu bedienen.

Diese Aufgabe wird erfindungsgemäß durch eine Vorrichtung zur Erzeugung frei definierbarer Repertoires von Elementen in Form von Ligand- und Akzeptorstrukturen zur kombinatorischen Synthese gelöst, beispielsweise in der Wirkstoffforschung, wobei die Elemente auf einem Substrat regelmäßig entlang einer ersten und einer zweiten Koordinate angeordnet und gesteuert einzeln von einem Dosierkopfhalter anfahrbar sind, der in der jeweiligen Position ein Reagenz- oder Lösungsmittel auf das jeweilige Element dosiert, wobei das Substrat die Gestalt eines um seine Rotationssymmetrieachse als Drehachse in Richtung der ersten Koordinate drehbaren Rotationskörpers besitzt und mindestens ein Dosierkopf dem Substrat gegenüber entlang der zweiten Koordinate parallel zur Oberfläche des Substrats verfahrbar und in Abhängigkeit von seiner jeweiligen Momentanposition zur Abgabe einer bestimmten Menge des betreffenden Reagenzes bzw. Lösungsmittels ansteuerbar ist, wobei diese Vorrichtung dadurch gekennzeichnet ist,
(i) dass die Drehbewegung des Substrats fortlaufend und nicht in Schaltschritten erfolgt, die dem Abstand von Elementen angepasst sind, die entlang der ersten Koordinate auf dem Substrat angeordnet sind,
(ii) dass die Verfahrbewegung des Dosierkopfhalters fortlaufend und nicht in Schaltschritten erfolgt, die dem Abstand von Elementen angepaßt sind, die entlang der zweiten Koordinate auf dem Substrat angeordnet sind, und
(iii)dass die zweite Koordinate einem zur Drehachse des Substrats exzentrischen Kreisbogen folgt.

Die erfindungsgemäße Vorrichtung kann dadurch gekennzeichnet sein, dass mehrere Dosierköpfe, vorzugsweise zwischen 2 und 100 und am zweckmäßigsten bis etwa 50 Dosierköpfe, gemeinsam und starr in einem seinerseits verfahrbaren Dosierkopfhalter angeordnet sind.

Ferner kann die erfindungsgemäße Vorrichtung dadurch gekennzeichnet sein, dass die Dosierköpfe getrennt aus verschiedenen Vorratsbehältern für die jeweiligen Reagenzigen bzw. Lösungsmittel speisbar sind.

Ferner kann die erfindungsgemäße Vorrichtung dadurch gekennzeichnet sein, dass zumindest einzelne der Vorratsbehälter kühlbar sind.

Ferner kann die erfindungsgemäße Vorrichtung dadurch gekennzeichnet sein, dass der Dosierkopf bzw. die Dosierköpfe zur schussartigen Abgabe des jeweiligen Reagenzes- oder Lösungsmittels ausgebildet ist bzw. sind.

Ferner kann die erfindungsgemäße Vorrichtung dadurch gekennzeichnet sein, dass sie eine von dem Dosierkopf bzw. Dosierkopfhalter unabhängige Auftragsvorrichtung zum Auftragen einer Spülflüssigkeit oder dergleichen auf das gesamte Substrat in situ aufweist.

Ferner kann die erfindungsgemäße Vorrichtung dadurch gekennzeichnet sein, dass die Auftragsvorrichtung mindestens eine selbstständig gegenüber dem Substrat verfahrbare Auftragsdüse aufweist.

Ferner kann die erfindungsgemäße Vorrichtung dadurch gekennzeichnet sein, dass sie Mittel zur Herbeiführung einer forcierten Trocknung in situ aufweist.

Ferner kann die erfindungsgemäße Vorrichtung dadurch gekennzeichnet sein, dass das Substrat beheizbar und/oder mit einem - gegebenenfalls aufgeheizten - Gas beaufschlagbar ist.

Schließlich kann die erfindungsgemäße Vorrichtung dadurch gekennzeichnet sein, dass die einzelnen Elemente aus von vorne herein oder mittels des Dosierkopfes bzw. Dosierköpfe darauf aufgebrachten Spots bestehen.

Indem das Substrat die Gestalt eines sich kontinuierlich oder zumindest quasi-kontinuierlich, in kleinen Schritten, um seine Achse drehenden Rotationskörpers hat und der Dosierkopf sich in einer einzigen Koordinate bewegt, entfallen ständige Beschleunigungen und Verzögerungen zumindest weitgehend. Dazu noch können die Elemente in Form von Ligand- und Akzeptorstrukturen bzw Spots außerordentlich dicht beieinander und in entsprechend großer Anzahl auftreten. Eine weitere Beschleunigung wird durch Verwendung einer Vielzahl von Dosierköpfen erreicht, die zudem noch, bei entsprechend kurzen Abgabeintervallen, gleichfalls kontinuierlich bewegt werden können. In jedem Fall werden die Dosiervorgänge zeitlich so auf die Rotationsbewegung abgestimmt, daß auf jede Position im Array die richtige Komponente aufdosiert wird.

Jede Einzelstruktur im Array wird schrittweise durch die chemische Verankerung von ein bis einhundert, vorzugsweise bis 20, Bausteinen auf einem ebenen unstrukturierten Substrat hergestellt. Hierfür werden konventionelle Methoden der Festphasenimmobilisierung und -synthese eingesetzt. Vgl. hierzu etwa:
Solid-phase Peptide Synthesis - R.B. Merrifield (1969) Adv. Enzymol. 32, 221-296
Spot-Synthesis: An easy technique for the positionally addressable, parallel chemical synthesis on a membrane support - Frank, R. (1992) Tetrahedron, 48, 9217-9232
Beispielsweise werden Peptide aus Aminosäurebausteinen, Oligonucleotide aus Nucleotidbausteinen, Peptoide aus N-substituierten Glycinbausteinen, PNA aus N-Aminoethyl-, N-(purin/pyrimidin)acetyl-Glycinbausteinen, Oligosaccharide aus Zuckerbausteinen etc. aufgebaut. Gleiches gilt jedoch auch für jede andere chemische Verbindung, die durch eine Abfolge von chemischen Syntheseschritten mit den jeweiligen Reagenzien als Bausteine aufgebaut wird. Ebenso können für die Verankerungsreaktionen enzymatisch katalysierte Reaktionen genutzt werden.

Gemäß einer fortschrittlichen Weiterbildung der Erfindung können auch weitere erforderliche Behandlungsschritte wie Waschen, Abspaltung einer chemischen Schutzgruppe, Blockierung (Capping) etc., die zwischen den einzelnen Verankerungsreaktionen durchgeführt werden müssen, unterbrechungsfrei in den Gesamtprozess der Repertoireerzeugung integriert werden. Dadurch entfällt eine Entnahme und Wiedereinfügung der Substrate mit den unfertigen Repertoires zum Zwecke einer chemischen.Behandlung außerhalb der Apparatur und durch Menschen, was ebenfalls geschwindigkeits- und effizienzsteigernd wirkt.

Nachfolgend ist ein Beispiel einer mit der erfindungsgemäßen Vorrichtung ausführbaren Verfahrensweise schematisch dargestellt:
S (Substrat) + A → S-A
S-A + B → S-A-B
S-A-B + C → S-A-B-C
S-A-B-C + B → S-A-B-C-B
etc.

Wie in diesem Schema gezeigt, wächst oder verändert sich die Einzelstruktur durch die Abfolge der Bausteine in den Verankerungsreaktionen. Dies läßt sich eindeutig in Form einer Abfolge von Zeichen (Buchstaben, Zahlen) für jeden Baustein beschreiben. Alle Einzelstrukturen werden parallel aufgebaut, d.h. sie wachsen alle bis zu ihrer jeweiligen Fertigstellung um jeweils einen Baustein je Verteilungszyklus. Zusätzlich zur Bausteinabfolge wird die Position des jeweiligen Elements im Array vorgegeben und protokollarisch festgehalten.

Machfolgend werden einige vorteilhafte Ausgestaltungsmöglichkeiten der erfindungsgemäßen Vorrichtung anhand der begleitenden Zeichnungen genauer beschrieben. Von diesen zeigt
- Fig. 1: ein perspektivisches Schema der erfindungsgemäßen Vorrichtung in einer zweiten Ausführungsform, mit einem scheibenförmigen Substrat,
- Fig. 2: ein perspektivisches Schema der erfindungsgemäßen Vorrichtung mit einem scheibenförmigen Substrat in einer abgewandelten Ausführung und
- Fig. 3: eine Draufsicht auf ein scheibenförmiges Substrat der erfindungsgemäßen Vorrichtung in einer praktischen Ausführungsform.

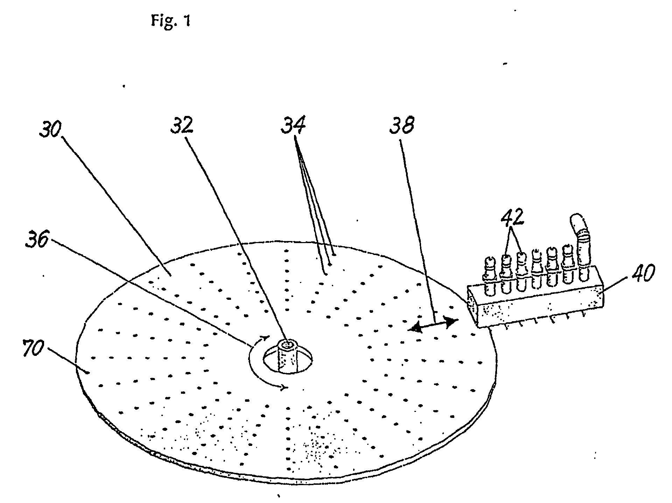

Bei der in Fig. 1, gezeigten Ausführungsform besitzt das Substrat, 30, scheibenförmige Gestalt, insbesondere die Gestalt einer kreisrunden Scheibe, die um eine Drehachse 32 drehend antreibbar ist. Das scheibenförmige Substrat 30 trägt die einzelnen Elemente, 34, in Ringen und zugleich radialen Reihen, die entlang einer ersten Koordinate, 36, bzw. zweiten Koordinate, 38, verlaufend anzunehmen sind. Entsprechend ist ein Dosierkopfhalter 40 mit einer Reihe fest darin angeordneter Dosierköpfe 42 radial zu der Drehachse 32 verfahrbar angeordnet. Die Drehbewegung des Substrats und die Verfahrbewegung des Dosierkopfhalters können gleichförmig oder in den Abständen der einzelnen Elemente 34 auf dem Substrat entsprechenden Schritten erfolgen, wobei die jeweils aufdosierten Substanzen in Verbindung mit den Positionen der einzelnen Elemente 34 festgehalten werden.

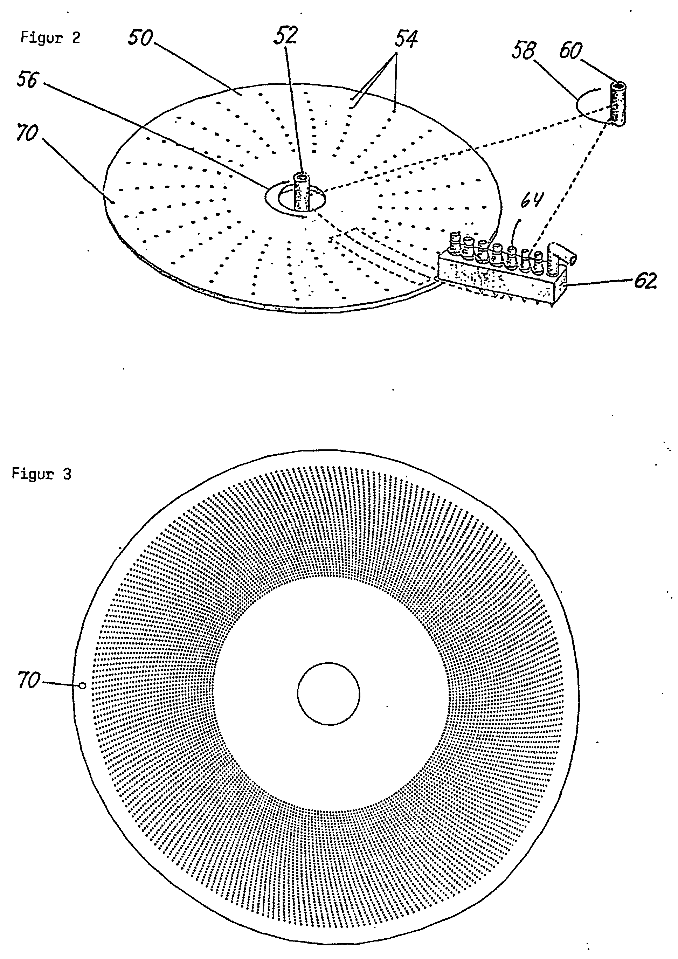

Fig. 2 zeigt eine derjenigen aus Fig. 1 insoweit ähnliche Ausführungsform, als das betreffende Substrat 50 wiederum eine um eine Drehachse, 52, drehend antreibbare Scheibe ist. Indessen sind die Elemente 54, außer ringförmig entlang einer ersten Koordinate 56, auf Kreisbögen entlang einer zweiten Koordinate 58 angeordnet, der entlang sich der Dosierkopfhalter 60 bei entsprechender Position des Substrats 50 bewegt. Dazu ist der Dosierkopfhalter 62 nach Art des Tonabnehmerkopfes eines Plattenspielers um eine außerhalb des Substrats 50 angeordnete Schwenkachse 60 schwenkbar.

Prinzipiell könnte die Bewegung des Dosierkopfes bei einem Substrat gemäß Fig. 2 auch entlang einem geschlossenen Kreis erfolgen.

Fig. 3 zeigt in Draufsicht eine praktische Ausführüngsform eines Substrats nach Art des Substrats 50 aus Fig. 2, bei dem jedoch die Zahl der Elemente mit etwa 10000 wesentlich größer ist. Dennoch kann ein solches Substrat etwa die Gestalt und Abmessungen einer sog. Compact Disk (CD) aufweisen.

Bemerkenswerterweise kann eine solche - oder auch noch größere - Zahl von Elementen seitens der Dosierköpfe der erfindungsgemäßen Vorrichtung unter einer einzigen und zudem noch ununterbrochenen Umdrehung des Substrats bedient werden, wobei noch all die betreffenden Bedienmaßnahmen bzw. die daraus resultierenden Strukturen der Elemente und deren Positionen automatisch protokollarisch festgehalten werden können.

Um für die jeweilige Ortsbestimmung der einzelnen Elemente 34, 54 einen Bezugspunkt zu haben, trägt das jeweilige Substrat 30, 50 etc., wie gezeigt, außerhalb der Anordnung der Elemente eine automatisch abtastbare Nullmarkierung, 70.

Bei jeder Ausführung kann das Substrat sich in einem umhüllenden Gefäß befinden (nicht gezeigt), das gewünschtenfalls mit einem Inertgas geflutet werden kann. Sofern der Dosierkopfhalter nicht innerhalb des Gefäßes angeordnet wird, können die Mündungen der Dosierköpfe oder auch nur die damit aufzubringende Substanzen durch einen Spalt des Gefäßes hindurchtreten.

Für einen Verteilungszyklus werden alle Positionen des Arrays entsprechend der Vorgabe ohne oder zumindest praktisch ohne Start- und Bremsbeschleunigungsvorgänge und deren Zeitbedarf bedient. Nach einem Verteilungszyklus können in der gleichen Vorrichtung - und damit ohne anschließende Neupositionierung mit den einer solchen innewohnenden Positionierfehlern - verschiedene notwendige Zwischenschritte erfolgen, die in einer für alle Elemente des Arrays gleichen Behandlung bestehen, so etwa in der Aufgabe bestimmter Reagenzien auf die gesamte Substratoberfläche, einem Spül- oder einem Trocknungsvorgang.

In einer denkbaren Ausführungsform weist das Substrat bzw. Array zwischen 2500 und 160000 Elemente auf, was einer Belegungsdichte von bis zu 3000 Positionen (Spots) pro cm² entspricht. Das jeweils aufzudosierende Volumen kann 100 pl bis 100 nl, die Dosierfrequenz 10 bis 1000 Hz, vorzugsweise etwa 100 Hz, betragen. Die Dosierköpfe können nach dem Prinzip von Tintenstrahldruckerdüsen oder piezoelektrisch arbeitend gestaltet sein.

Eine Wasch- und Trockenbehandlung des gesamten Substrats in situ kann beispielsweise mittels einer Schwammrolle bzw. durch beschleunigte Drehung des Substrats in einem Schleudergang erfolgen. Ebenso kommt eine forcierte Verdunstung oder Verdrängung im Gasstrom in Betracht.

Um Reagenzien und Lösungsmittel für erforderliche Zwischenschritte (wie Reaktionsstop, Auswaschen überschüssiger Reagenzien, etc.) auf der gesamten Substratoberfläche zu verteilen, werden diese entweder unter Drehung des Substrats über gesonderte Düsen auf die Substratoberfläche aufgetragen und gleichmäßig verteilt, oder die Substratoberfläche wird durch Eintauchen des Substrats, ggf. unter langsamer Drehung in eine mit diesen Reagenzien bzw. Lösungsmitteln gefüllten Wanne vollständig benetzt. Bei der Substratsausführung als ebene Scheibe nach den Figuren 1 bis 3 kann eine Substanz oder Spülflüssigkeit auch dadurch auf die gesamte substratoberfläche aufgebracht werden, daß sie bei erhöhter Drehzal des Substrats auf dessen mittleren Bereich mit mindestens einer auftragsdüse aufgetragen wird, um sich von dort weg durch die Fliehkraft über die Substratoberfläche hinweg nach außen zu verteilen.

Bei jeder Ausführung kann die Unterseite des Substrats dazu genutzt werden, z.B. optisch lesbar, Informationen aufzunehmen, etwa bezüglich der Element-Positionen sowie der Art, der Zusammensetzung und der Struktur der jeweiligen Repertoirs.

Während der Drehung des Substrats werden die in dem jeweiligen Dosierkopfhalter vereinigten Dosierköpfe schrittweise oder auch kontinuierlich entlang der zweiten Koordinate über die Substratoberfläche geführt. Dabei nehmen die Dosierköpfe bezogen auf das Substrat nacheinander die Positionen {xᵢ, x(ᵢ+₁)_{S}, x(ᵢ+₂)_{S}, x(ᵢ+₃)_{S}, ... , x(ᵢ+ₙ)_{S} ein, wobei i der jeweilige Positionierschritt, n die Anzahl der Dosierköpfe im Dosierkopfhalter 62 und S der Abstand der Dosierköpfe untereinander in Richtung der zweiten Koordinate ist. Dabei spielt es keine Rolle, ob die Positionierschritte entsprechend der Figur 1 geradlinig oder gemäß Fig. 2 als Bogen- oder Winkelbewegungen erfolgen.

Wird die Dauer einer Umdrehung des Substrats T in die ganzzahlige Anzahl z Intervalle der Länge t = T/z unterteilt, so nehmen die Dosierköpfe in bezug auf das Substrat zu jedem Zeitpunkt mt entlang der ersten Koordinate die Positionen Yₘ₁, Yₘ₂, Yₘ₃, ..., Yₘₙ ein.

Die Koordinaten Xᵢ; Yₘ überspannen das gesamte Array des zu erzeugenden Repertoirs und geben eindeutig die Positionen der einzelnen Elemente (Spots) an. Mit diesen Positionen lassen sich in dem Repertoir (Bibliothek) die jeweiligen substanziellen Eigenschaften für ein jedes Element speichern.

Das Substrat kann aus Glas, Keramik oder Kuntstoff, insbesondere Polyolefinen, mit oder ohne Füllstoffen, wie z.B. Polypropylen (PP), Polyethylen (PE), Polymethylpenten (PMP), Polychlortrifluorethylen (PCTFE), Polytetrafluorethylen (PTFE), Polyvinylidenfluorid (PVDF), Ethylen-Vinylacetat-Copolymer (EVA) oder Ethylen-Vinylalkohol-Copolymer (EVAL) bestehen und in Form einer Folie, Membran Faservlierform oder Platte gestaltet sein. Es wird entweder, wie nachfolgend unter A) und B) beschrieben, in einem zweistufigen Prozeß an der Oberfläche funktionalisiert, oder es werden, wie unter C) oder D) beschrieben, direkt Aminogruppen eingeführt. Die unter E) beschriebenen Pfropfpolymerisationen ermöglichen durch den Einsatz von heteroatomsubstituierten Monomeren die Funktionalisierung von Polymeroberflächen unter Vervielfältigung der Zahl der ursprünglich eingeführten Funktionalitäten bei gleichzeitiger Ausbildung größerer Abstände von der Substratoberfläche (Spacer).

Bei der zweistufigen Funktionalisierung werden im ersten Schritt abhängig von dem verwendeten Polyolefin funktionelle Gruppen, bevorzugt Hydroxygruppen, an der Oberfläche erzeugt. In einem weiteren Schritt werden die im ersten Schritt zusätzlich erzeugten unerwünschten Funktionalitäten, wie Carbonsäuren und deren Ester, Aldehyde, Ketone und Alkene, in Hydroxygruppen überführt. Dabei läßt sich die Oberflächenkonzentration an funktionellen Gruppen über die Reaktionszeit und - temperatur während des ersten Reaktionsschritts steuern.

Eine Ausnahme ist EVAL, daß nicht weiter behandelt wird, da bereits Hydroxygruppen auf der Oberfläche vorhanden sind.

Die so funktionalisierten Substrate werden direkt für die Synthese verwendet oder vorher mit Spacern und/oder Linkern versehen.

Diesbezügliche Darstellungen finden sich in:
J. S. Früchtel, G. Jung, Angew. Chem. 1996, 108, 19-46
R. Frank, S. Matysiak, Derivatisierte Polymermaterialien, Patent DE (1)96 38 085.5
Einige konkrete Vorschriften für die Funktionalisierung von möglichen Substratoberflächen sind in den Verwendungsbeispielen beschrieben.

### A) Schritt 1:

### 1. Reaktion: Oxidation von PE, PP und PMP mit Chromtrioxid

Die Durchführung erfolgt analog einer Vorschrift für die PP-Oxidation, die in K.-W. Lee, T.J. McCarthy, Macromolecules 1988, 21, 309-313 beschrieben ist.

### 2. Reaktion: Oxidation von PE, PP und PMP mit Ozon

Die Durchführung erfolgt analog einer Vorschrift, die in K. Fujimoto, Y. Takebayashi, H. Inoue, Y. Ikada, Journal of Polymer Science: Part A, Polymer Chemistry, 1993, 31, 1035-43 beschrieben ist.

Verwendet wird ein Ozongenerator der Firma Fischer Labor- und Verfahrenstechnik, Bonn Bad Godesberg
- Sauerstoffstrom:: 20-40 l/h

### 3. Reaktion: Oxidation von PP, PE, PMP mit Wasserstoffperoxid in Trifluoressigsäure

Die Durchführung erfolgt analog einer Vorschrift, die in N.C. Deno, E.J. Jedziniak, L.A. Messer, M.D. Meyer, S.G. Stroud, E.S. Tomezsko, Tetrahedron 1977, 33, 2503-2508 beschrieben ist.

### 4. Reaktion: Eliminierung von Fluorid aus PVDF

Die Dehydrofluorierung mit Natriumhydroxid unter Phasentransfer-Bedingungen erfolgt analog einer Vorschrift, die in A.J. Dias, T.J. McCarthy, Macromolecules 1984, 17, 2529-2531 beschrieben ist.

Die Dehydrofluorierung mit DBU erfolgt analog einer Vorschrift, die in J.V. Brennan, T.J. McCarthy, Polym. Prepr. (Am. Chem. Soc) Div. Polym. Chem. 1989, 30, 152-153 beschrieben ist.

### 5. Reaktion: Reduktion von PTFE und PCTFE mit Naphtalin-Natrium

- Reaktionstemperatur:: 21 °C
- Reaktionszeit:: 5 min - 24 h
- Lösungsmittel:: THF

Durchführung: Die Darstellung der Naphtalin-Natrium-Lösung erfolgt nach H.F. Ebel und A. Lüttringhaus in Houben-Weyl, Methoden der Organischen Chemie, Band XIII/1, Georg Thieme Verlag Stuttgart 1970, S. 381.

Das Substrat wird unter Schutzgas während der angegebenen Reaktionszeit mit einer 0.1 M -1.25M Lösung von Naphthalin-Natrium in THF bedeckt und geschüttelt. Dann wird das Substrat mit Wasser, 1M wäßriger Natronlauge, 1M wäßriger Salzsäure und Tetrahydrofuran gewaschen und anschließend getrocknet.

### 6. Reaktion: Reduktion von PTFE und PCTFE mit Benzoin

Die Durchführung erfolgt analog einer Vorschrift, die in C.A. Costello, T.J. McCarthy, Macromolecules 1987, 20, 2819-2828 angegeben ist. Die Umsetzung ist für PTFE beschrieben und für PCTFE analog durchführbar.

### 7. Reaktion: Verseifung von EVA

Die Durchführung erfolgt analog einer Vorschrift, die in der Dissertation von K.Schröder, Oberflächenmodifizierung und -charakterisierung von PP-Blends zur Entwicklung eines Biomaterials", Rheinisch-Westfälische Technische Hochschule Aachen, 1994, S.91ff, beschrieben ist.

### B) Schritt 2:

Hydroborierung mit Boran/THF-Komplex und Oxidation mit Wasserstoffperoxid: Die Durchführung erfolgt nach einer Vorschrift, die in K.-W. Lee, T.J. McCarthy, Macromolecules 1988, 21, 309-313 beschrieben ist.

Die Hydroborierung mit Boran/Dimethylsulfid-Komplex und Oxidation mit Wasserstoffperoxid bzw. Natriumperborat erfolgt nach Vorschriften, die in C.F. Lane, H.L. Myatt, J. Daniels, H.B. Hopps, J. Org. Chem. 1974, 39, S. 1437-1438 und S. 3052-3054, G.W. Kabalka, T.M. Shoup, N.M. Goudgaon, J. Org. Chem. 1989, 54, 5930-5933 beschrieben sind.

### C) Aminierung von PP-Oberflächen mittels Plasmaverfahren mit Radiofrequenzplasma

### Durchführung:

### Probenmaterial und Probenreinigung

Die Polypropylen-Proben hatten einen Durchmesser von 115 mm und eine Dicke von 1,9 mm. Für die Bestimmung der Flächenbelegung mit Aminogruppen wurden neben den ganzen Proben auch geviertelte Probenstücke verwendet. Bei den Plasmapolymer-Beschichtungen wurden außer den PP-Proben auch Glassubstrate und doppelseitig polierte Si-Proben beschichtet. Die Proben wurden vor einer Plasmabehandlung bzw. Beschichtung folgenden Reinigungsschritten unterzogen:
- Ultraschall-Reinigung in einem neutralen Tensid-Bad bei ca. 60°C
   Zeit: > 10 min, mit dest. Wasser nachgespült
- Ultraschall-Behandlung mit dest. Wasser zur Entfernung der Tensid-Lösung bei ca. 60°C, Zeit: > 10 min, mit dest. Wasser nachgespült, mit Stickstoff trocken geblasen
- Aufbewahrung der gereinigten PP-Proben im Trockenschrank bei 50-60°C
   Zeit: > 2 h

Die Polypropylen-Proben wurden unmittelbar vor Bestückung der Plasmaanlage aus dem Trockenschrank genommen und auf der unteren Elektrode placiert. Vor einem Vorbehandlungs- bzw. Beschichtungsversuch wurde die Anlage mindestens 1 Stunde evakuiert, um ein möglichst gutes Endvakuum und damit eine geringe Restgasverunreinigung zu erhalten. In dieser Zeit wird sich die Probentemperatur der Umgebungstemperatur angenähert haben. Je nach Plasmaleistung und Versuchszeit, erhöht sich die Probentemperatur während einer Oberflächenbehandlung, nur leicht.

Die Abscheidung von Plasmapolymerschichten in einem Niederdruckreaktor ist ein geeignetes Verfahren, um Kunststoffoberflächen zu beschichten. Die Eigenschaften der abgeschiedenen Schichten lassen sich, durch die Wahl der verwendeten Monomere, in diesem Verfahren gezielt beeinflussen. Die Monomere werden gasförmig in den Prozeß geleitet und durch ein Plasma zur Polymerisation auf der Substratoberfläche angeregt. Auf diese Weise wächst, durch die Vernetzung der Monomere, eine Plasmapolymerschicht auf. Für die Anregung der Plasmapolymerisation ist nur eine geringe Energiedichte notwendig. Bei zu hohen Plasmaleistungen kommt es hingegen zu einer zunehmenden Zersetzung und Spaltung der Monomermoleküle.

Um die Anbindung der Plasmapolymerschicht auf der Polypropylen-Oberfläche zu verbessern, wurde vor dem Beschichtungsprozeß eine Plasmavorbehandlung durchgeführt. Dieser Prozeßschritt wurde mit einem Argon/Sauerstoff-Gemisch bei höherer Plasmaleistung vorgenommen, um die Probenoberflächen zusätzlich zu reinigen und zu aktivieren.

Die Plasmapolymer-Beschichtungen wurden mit Allylamin in einem Argon-Plasma vorgenommen.

Die Versuche zur Abscheidung von dünnen Plasmapolymerschichten wurden in einer kommerziellen Hochfrequenz-Plasmaanlage (PLAS-MOX 1 der Fa. Plasmos, München) durchgeführt. Bei dieser Parallelplatten-Anlage können beide Elektroden mit Hochfrequez-Plasma (HF-Anregung: 13,56 Mhz) beaufschlagt werden.

Die Versuche wurden mit geringer Plasmaleistung durchgeführt, wobei für die Beschichtung entweder die untere oder die obere Elektrode mit Hochfrequenz-Anregung betrieben wurde. In der folgenden Tabelle sind die Versuchsbedingungen bei der Plasmapolymer-Beschichtung aus Allylamin zusammengestellt.

| Versuchbezeichnung | Vorbehandlung | Ar | Druck | HF- | Druck | Versuchs- |
|---|---|---|---|---|---|---|
| | | Flow | Ar | Leistung | im Prozeß | Zeit |
| | | sccm | mbar | W | mbar | min |
| | | | | | | |
| GBF/03/12/97/PLA/1 | 20 sccm Ar / 20 sccm O2 | 50 | 0.06 | 10(o.E.) | 0,116 | 15 |
| | HF(u.E.)=200 W / 2 min | | | | | |
| | | | | | | |
| GBF/04/12/97/PLA/1 | 20 sccm Ar/20 sccm O2 | 50 | 0,063 | 10(u.E.) | 0,125 | 15 |
| | HF(u.E.)=200 W / 2 min | | | | | |
| | | | | | | |
| GBF/04/12/97/PLA/2 | 20 sccm Ar / 20 sccm O2 | 50 | 0,062 | 50(o.E.) | 0,126 | 15 |
| | HF(u.E.)=200 W / 2 min | | | | | |
| | | | | | | |
| GBF/04/12/97/PLA/3 | 20 sccm An / 20 sccm 02 | 50 | 0,063 | 10(o.E.) | 0,183 | 15 |
| | HF(u.E.)=200 W / 2 min | | | | | |
| | | | | | | |
| GBF/05/12/97/PLA/1 | 20 sccm Ar/20 sccm O2 | 50 | 0,062 | 20 (u.E.) | 0.127 | 15 |
| | HF(u.E.)=200 W / 2 min | | | | | |
| | | | | | | |
| GBF/05/12/97/PLA/2 | | 50 | 0,062 | 10 (o.E.) | 0,123 | 5 |
| | | | | | | |
| | | | | | | |
| GBF/05/12/97/PLA/3 | 20 sccm Ar / 20 sccm O2 | 50 | 0,062 | 10 (o.E.) | 0,127 | 5 |
| | HF(u.E.)=200W / 2 min | | | | | |

Die Versuche mit Allylamin zeigen, daß eine hohe Aminogruppen-Dichte auf der Polypropylen-Oberfläche erreicht werden kann. Außerdem konnte die Annahme, daß eine Plasmavorbehandlung einen positiven Einfluß auf die Haftung und die Ausbildung der abgeschiedenen Plasmapolymer-Schicht hat, bestätigt werden.

In einer weiteren Versuchsreihe sollte untersucht werden, ob erstens die hohe Belegung mit Aminogruppen reproduzierbar ist und zweitens sich noch eine Verbesserung der Belegung erreichen läßt. Ausgangspunkt für diese Versuche war der Versuch GBF/05/12/97/PLA/1, der mit etwa 1 nmol/cm² eine hohe Dichte an Aminogruppen auf der abgeschiedenen Schicht aufwies. Bei dieser Versuchsreihe wurde die Plasmaleistung, die als entscheidene Größe für die hohe Aminogruppen-Dichte angesehen wurde, variiert. Die Hochfrequenzanregung wurde auf der unteren Elektrode eingespeist. Die eingestellten Versuchsbedingungen sind in folgender Tabelle dargestellt.

| Versuchbezeichnung | Vorbehandlung | Ar | Druck | HF- | Druck | Versuchs- |
|---|---|---|---|---|---|---|
| | | Flow | Ar Leistung | Leistung | im Prozeß | Zeit |
| | | sccn | mbar | W (u.E.) | mbar | min |
| | | | | | | |
| GBF/22/01/98/PLA/1 | 20 sccm Ar / 20 sccm O2 | 50 | 0,059 | 20 | 0,125 | 15 |
| | HF(u.E.)=200 W/2 min | | | | | |
| | | | | | | |
| GBF/22/01/98/PLA/2 | 20 sccm Ar / 20sccm O2 | 50 | 0.06 | 30 | 0.126 | 15 |
| | HF(u.E)=200 W/2 min | | | | | |
| | | | | | | |
| GBF/22/01/98/PLA/3 | 20 sccm Ar / 20 sccm O2 | 50 | 0,06 | 50 | 0,13 | 15 |
| | HF(u.E.)=200 W / 2 min | | | | | |
| | | | | | | |
| GBF/22/01/98/PLA/4 | 20 sccm Ar / 20 sccm O2 | 50 | 0,059 | 15 | 0,126 | 15 |
| | HF(u.E.)=200 W/2 min | | | | | |
| | | | | | | |
| GBF/22/01/98/PLA/5 | 20 sccm Ar / 20 sccm O2 | 50 | 0,06 | 20 | 0,126 | 15 |
| | | | | | | |
| | | | | | | |
| | HF(u.E.)=200 W / 2 min | | | | | |

Die Oberflächenkonzentration an Aminogruppen läßt sich nach der Plasmapolymerisation mit Allylamin durch eine zweistündige Behandlung mit 50%iger Trifluoressigsäure in Dichlormethan bei Raumtemperatur deutlich steigern.

### D) Aminierung von Glas und Metalloxidkeramiken

Eine Übersicht zur Derivatisierung von Siliciumoxidoberflächen gibt E.F. Vasant, P. van der Voort, K.C. Vrancken, Characterization and chemical modification of the silica surface, Studies in Surface Science and Catalysis Vol. 93; Elsevier 1995 Amsterdam.

Die beschriebenen Verfahren lassen sich auch auf Glas und Metalloxidkeramiken anwenden.

### E) Pfropfpolymerisation auf Polymeroberflächen

Eine Übersicht zur Oberflächenfunktionalisierung von Polymeren durch Pfropfpolymerisation findet sich in
M. Ulbricht et al., J. of Membran Science 1996, 115, 31-47
Y. Ikada, Biomaterials 1994, 15, 725-736
und in der dort zitierten Literatur.

### Logistik:

Das Array der Zielstrukturen wird unter Anwendung einer Software festgelegt und in eine zeitliche Abfolge von Dosieroperationen für die Bausteine, Reagenzien und Lösungsmittel transformiert, die für den chemischen/enzymatischen Aufbau der Verbindungsbibliothek benötigt werden. Alle Bewegungen und Schaltungen von Ventilen werden durch einen Computer gesteuert.

### Interaktionstest mit den Arrays:

### Variante 1: Bibliothek von immobilisierten Strukturen

Die mit der Bibliothek von Verbindungen belegte Substratoberfläche wird mit der Lösung eines Bindungspartners (Ligand oder Akzeptor) in Kontakt gebracht und inkubiert.
A) Das Substrat wird mit der Lösung überschichtet.
B) Die Lösung wird in einer Wanne entsprechender Abmessungen vorgelegt und das Substrat darin versenkt.
C) Die Lösung wird durch Kapillarkraft zwischen der Substratoberfläche und einer aufgelegten Deckplatte festgehalten. Gegebenenfalls können verschiedene Teilbereiche der Substratoberfläche mit entsprechend geformten Deckplattensegmenten gleichzeitig mit verschiedenen Lösungen unterschiedlicher Bindungspartner inkubiert werden.

Der Nachweis des gebundenen Bindungspartners erfolgt:
1. mittels a) radioaktiver Markierung, b) kovalenter Verknüpfung des Liganden/Akzeptors mit einem Enzym oder c) kovalenter Verknüpfung des Liganden/Akzeptors mit fluoreszierenden und nicht fluoreszierenden Farbstoffen. Der Nachweis und die Quantifizierung der Bindung auf den Arrays erfolgt mit marktüblichen Geräten durch Bestimmung der örtlich gebundenen Radioaktivität (PhosphorImager), Fluoreszenz (FluorImager) oder Chemilumineszenz (LumiImager);
2. durch direkte Markierung der Strukturen der Bibliothekselemente mit Fluoreszenzfarbstoffen. Die kovalente Verknüpfung der Farbstoffe mit den Bibliothekselementen kann an verschiedenen Anknüpfungspunkten erfolgen, beispielsweise in Peptiden N- oder C-terminal. Der Nachweis der Bindung des Bindungspartners erfolgt durch Bestimmung der Änderung der Fluoreszenzintensität nach Interaktion zwischen markiertem Bibliothekselement und Bindungspartner.

Eine weitere Möglichkeit zum Bindungsnachweis ist die Bestimmung des Energietransfers vom Fluoreszenzfarbstoff auf bestimmte Gruppen im Bindungspartner. Beispielsweise kann die Struktur des Bibliothekselementes mit Anthraniläure (2-Aminobenzoesäure) markiert werden und die Bindung z.B. eines Proteins durch Energietransfer vom Anthranilsäurerest auf einen Tryptophanrest im Protein nachgewiesen werden.

### Variante 2: Bibliothek mit löslichen Strukturen

In diesem Fall wird die funktionalisierte und gegebenenfalls mit einem Spacer versehene Substratoberfläche zunächst mit einem "Linker" derivatisiert. Die Bibliothek wird dann auf den Linkerfunktionen aufgebaut. Der Linker erlaubt es, nach der Synthese der Bibliothek die kovalente chemische Verknüpfung mit der Substratoberfläche gezielt zu spalten.

Dazu kann folgendermaßen vorgegangen werden:
A) Die gesamte Substratoberfläche wird mit einem z. B. gasförmigen Spaltreagenz behandelt. Die dann noch örtlich getrennt vorliegenden Bibliothekselemente werden durch anschließende Verteilung kleiner Tropfen eines geeigneten Lösungsmittels aufgenommen und von dort einzeln in eine Testanordnung überführt.
B) Das Spaltreagenz wird in Form von kleinen Tropfen gezielt auf die Orte der Bibliothekselemente verteilt, worauf von dort die abgespaltenen Verbindungen einzeln in eine Testanordnung überführt werden.

### Verwendungsbeispiele

### Chemische Funktionalisierung des Substrats

### A) Schritt 1:

### 1. Reaktion: Oxidation mit Chromtrioxid

- Polymere:: PE, PP, PMP
- Reaktionstemperatur:: Raumtemperatur, d.h. ca. 21 °C
- Reaktionszeit:: 15 min - 24 h
- Lösungsmittel:: Eisessig und Acetanhydrid im Volumenverhältnis 1:1

### Durchführung:

Das Substrat wird mit einer 0.5 M Lösung von Chromtrioxid im angegebenen Lösungsmittel bedeckt und bei der angegebenen Reaktionstemperatur geschüttelt. Nach Ablauf der Reaktionszeit wird das Substrat mit Wasser, 0.1M wäßriger EDTA-Lösung und Ethanol gewaschen und anschließend getrocknet.

### 2. Reaktion: Oxidation mit Ozon

- Polymere:: PE, PP, PMP
- Reaktionstemperatur:: Raumtemperatur, d.h. ca. 21 °C
- Reaktionszeit:: 15 min - 24 h

### Durchführung:

Das Substrat wird in einem Behältnis mit dem durch einen Ozongenerator erzeugten Ozon in einem Sauerstoff-Strom während der angegebenen Reaktionszeit umspült.
- Gasstrom:: 20-40 l/h

Der Ozongenerator stammte von der Firma Fischer Labor-und Verfahrenstechnik, Bonn - Bad Godesberg

### 3. Reaktion: Oxidation mit wäßriger Wasserstoffperoxid-Lösung in Trifluoressigsäure

- Polymere:: PP, PE, PMP
- Reaktionstemperatur:: 50°C bis Rückflußtemperatur
- Reaktionszeit:: 5 - 90 min
- Lösungsmittel:: Trifluoressigsäure

### Durchführung:

Das Substrat wird während der angegebenen Reaktionszeit mit einer Lösung aus 30%iger wäßriger Wasserstoffperoxidlösung in Trifluoressigsäure im Volumenverhältnis 1:9 bedeckt und auf die angegebene Reaktionstemperatur erhitzt. Dann wird das Substrat mit Wasser, Methanol und Dichlormethan gewaschen und anschließend getrocknet.

### 4. Reaktion: Eliminierung von Fluorid aus PVDF

### Reaktion 4.1

- Polymer:: PVDF
- Reaktionstemperatur:: 80°C
- Reaktionszeit:: 10 - 360 min
- Lösungsmittel:: Heptan

### Durchführung:

Das Substrat wird während der angegebenen Reaktionszeit mit einer 1M Lösung von DBU im angegebenen Lösungsmittel bedeckt und geschüttelt. Dann wird das Substrat mit Wasser, Methanol und Dichlormethan gewaschen und anschließend getrocknet.

### Reaktion 4.2

- Polymer:: PVDF
- Reaktionstemperatur:: Raumtemperatur, d.h. ca. 21 °C bis 80 °C
- Reaktionszeit:: 2 - 360 min

### Durchführung:

Das Substrat wird während der angegebenen Reaktionszeit mit einer 8M wäßrigen Lösung von Natriumhydroxid und einem Phasentransferkatalysator, wie z.B. Tetra-n-butylammoniumbromid (10 mg auf 15 ml), bedeckt und geschüttelt. Dann wird das Substrat mit Wasser, Methanol und Dichlormethan gewaschen und anschließend getrocknet.

### 5. Reaktion: Reduktion mit Naphtalin-Natrium

- Polymere:: PTFE, PCTFE
- Reaktionstemperatur:: Raumtemperatur, d.h. ca. 21 °C
- Reaktionszeit:: 5 min - 24 h
- Lösungsmittel:: THF

### Durchführung:

Die Darstellung der Naphtalin-Natrium-Lösung wird von H.P. Ebel und A. Lüttringhaus in Houben-Weyl, Methoden der Organischen Chemie Band XIII/1, Georg Thieme Verlag Stuttgart 1970, S.381 beschrieben.

Das Substrat wird unter Schutzgas während der angegebenen Reaktionszeit mit einer 0.1M - 1.25M Lösung von Naphthalin-Natrium in THF bedeckt und geschüttelt. Dann wird das Substrat mit Wasser, 1M wäßriger Natronlauge, 1M wäßriger Salzsäure und Tetrahydrofuran gewaschen und anschließend getrocknet.

### 6. Reaktion: Reduktion mit Benzoin

- Polymere:: PTFE, PCTFE
- Reaktionstemperatur:: 50°c
- Reaktionszeit:: 1 h - 24 h
- Lösungsmittel:: DMSO

### Durchführung:

Unter Schutzgas und Feuchtigkeitsausschluß wird eine 0.4 M Lösung von Benzoin in DMSO hergestellt, worauf diese Lösung tropfenweise zu einer 0.4 M Lösung von Kalium-tert.-butylat in DMSO, die das Substrat bedeckt, gegeben wird. Danach wird während der angegebenen Reaktionszeit bei der angegebenen Temperatur geschüttelt. Dann wird das Substrat mit Wasser, Methanol und Dichlormethan gewaschen und anschließend getrocknet.

### 7. Reaktion: Verseitung von EVA

- Polymer:: EVA
- Reaktionszeit:: 1 h - 24 h
- Lösungsmittel:: Methanol

### Durchführung:

Das Substrat wird in einer 2M Lösung von Natriumhydroxid in Methanol während der angegebenen Reaktionszeit unter Rückfluß erhitzt. Dann wird das Substrat mit 1M wäßriger Salzsäure, Wasser, Methanol und Dichlormethan gewaschen und anschließend getrocknet.

### B) Schritt 2

### 1. Reaktion: Hydroborierung

- Polymere:: alle
- Reaktionstemperatur:: Raumtemperatur, d.h. ca. 21°C, bis 50°C
- Reaktionszeit:: 10 min - 24 h
- Lösungsmittel:: wasserfreie inerte Lösungsmittel, wie z.B. Tetrahydrofuran, Methyl-tert.-butyl-Ether, Diethylether, Dioxan, Benzol, Toluol, Alkane (C5-C8)

### Durchführung:

Das Substrat wird während der angegebenen Reaktionszeit mit einer 0.1 - 1M Lösung von Boran-THF-Komplex oder Boran-Dimethylsulfid-Komplex im angegebenen Lösungsmittel bedeckt und bei der angegebenen Reaktionstemperatur geschüttelt.

### Oxidation des Boran-haltigen Substrats:

### Methode A: Oxidation mit Wasserstoffperoxid

Das Substrat wird mit einer Lösung aus 30%igem wäßrigen Wasserstoffperoxid und 1.5 M wäßriger Natronlauge im Volumenverhältnis 1:2 bedeckt und 1 - 3 h bei Raumtemperatur geschüttelt. Dann wird das Substrat mit 1M wäßriger Natronlauge, 1M wäßriger Salzsäure, Wasser, DMF und Dichlormethan gewaschen und anschließend getrocknet.
- Methode B:: Oxidation mit Natriumperborat
- Lösungsmittel:: Wasser, THF/Wasser (1:1), DMF
- Reaktionstemperatur:: Raumtemperatur, d.h. ca. 21°C, bis 50°C

Das Substrat wird mit Natriumperborat und dem angegebenen Lösungsmittel bedeckt und 1 - 3 h bei der angegebenen Reaktionstemperatur geschüttelt. Dann wird das Substrat mit 1M wäßriger Natronlauge, 1M wäßriger Salzsäure, Wasser, DMF und Dichlormethan gewaschen und anschließend getrocknet.

## Patentansprüche

1. Vorrichtung zur Erzeugung frei definierbarer Repertoires von Elementen (54) in Form von Ligand- und Alczepborstrukturen zur kombinatorischen Synthese beispielsweise in der Wirkstoffforschung, wobei die Elemente auf einem Substrat (50) regelmäßig entlang einer ersten und einer zweiten Koordinate (56 bzw. 58) angeordnet und gesteuert einzeln von einem Dosierkopfhalter (62) anfahrbar sind, der in der jeweiligen Position ein Reagenz oder Lösungsmittel auf das jeweilige Element (54) dosiert, wobei das Substrat (50) die Gestalt eines um seine Rotationssymmetrieachse (52) als Drehachse in Richtung der ersten Koordinate (56) drehbaren Rotationskörpers besitzt und mindestens ein Dosierkopf (64) dem Substrat (50) gegenüber entlang der zweiten Koordinate (58) parallel zur Oberfläche des Substrats (50) verfahrbar und in Abhängigkeit von seiner jeweiligen Momentanposition zur Abgabe einer bestimmten Menge des betreffenden Reagenzes bzw. Lösungsmittels ansteuerbar ist, **dadurch gekennzeichnet**,
(i) dass die Drehbewegung des Substrats (50) fortlaufend und nicht in Schaltschritten erfolgt, die dem Abstand von Elementen (54) angepasst sind, die entlang der ersten Koordinate (56) auf dem Substrat (50) angeordnet sind,
(ii) dass die Verfahrbewegung des Dosierkopfhalters (62) fortlaufend und nicht in Schaltschritten erfolgt, die dem Abstand von Elementen (54) angepaßt sind, die entlang der zweiten Koordinate (58) auf dem Substrat (50) angeordnet sind, und
(iii) dass die zweite Koordinate (58) einem zur Drehachse (52) des Substrats (50) exzentrischen Kreisbogen folgt.

2. Vorrichtung nach Anspruch 1, **dadurch gekennzeichnet, daß** mehrere - vorzugsweise zwischen 2 und 100 und am zweckmäßigsten bis etwa 50 - Dosierköpfe (64) gemeinsam und starr in einem seinerseits verfahrbaren Dosierkopfhalter (62) angeordnet sind.

3. Vorrichtung nach Anspruch 2, **dadurch gekennzeichnet, dass** die Dosierköpfe (64) getrennt aus verschiedenen Vorratsbehältern für die jeweiligen Reagenzien bzw. Lösungsmittel speisbar sind.

4. Vorrichtung nach Anspruch 3, **dadurch gekennzeichnet, dass** zumindest einzelne der Vorratsbehälter kühlbar sind.

5. Vorrichtung nach einem der vorhergehenden Ansprüche, **dadurch gekennzeichnet, dass** auf dem Substrat zwischen 2.500 und 160.000, vorzugsweise größenordnungsmäßig 10.000, Elemente (54) Aufnahme finden.

6. Vorrichtung nach einem der vorhergehenden Ansprüche, **dadurch gekennzeichnet, dass** der Dosierkopf bzw. die Dosierköpfe (64) zur schußartigen Abgabe des jeweiligen Reagenzes oder Lösungsmittels ausgebildet ist bzw. sind.

7. Vorrichtung nach Anspruch 6, **dadurch gekennzeichnet, dass** der Dosierkopf bzw. die Dosierköpfe (64) nach Art eines Tintenstrahldruckers arbeitend ausgebildet ist bzw. sind.

8. Vorrichtung nach einem der Ansprüche 1 bis 7, **dadurch gekennzeichnet, dass** das Substrat (50) scheibenförmig ist.

9. Vorrichtung nach einem der vorhergehenden Ansprüche, **dadurch gekennzeichnet, dass** sie eine von dem Dosierkopf (64) bzw. Dosierkopfhalter (62) unabhängige Auftragsvorrichtung zum Auftragen einer Spülflüssigkeit oder dergleichen auf das gesamte Substrat (50) in situ aufweist.

10. Vorrichtung nach Anspruch 9, **dadurch gekennzeichnet, dass** die Auftragsvorrichtung mindestens eine selbständig gegenüber dem Substrat (50) verfahrbare Auftragsdüse aufweist.

11. Vorrichtung nach Anspruch 9 in Verbindung mit Anspruch 8, **dadurch gekennzeichnet, dass** die Auftragsvorrichtung mindestens eine den Mittelbereich des scheibenförmigen Substrats (50) beaufschlagende Auftragsdüse aufweist und dem Substrat (50) während der Tätigkeit dieser Auftragsdüse eine erhöhte Drehgeschwindigkeit vermittelbar ist.

12. Vorrichtung nach einem der Ansprüche 9 bis 11, **dadurch gekennzeichnet**, **das** sie Mittel zur Herbeiführung einer forcierten Trocknung des Substrats (50) in situ aufweist.

13. Vorrichtung nach Anspruch 12, **dadurch gekennzeichnet, dass** das Substrat (50) für die forcierte Trocknung in einem Schleudergang drehbar ist.

14. Vorrichtung nach Anspruch 12 oder 13, **dadurch gekennzeichnet, dass** das Substrat (50) beheizbar und/oder mit einem - gegebenenfalls aufgeheizten - Gas beaufschlagbar ist.

15. Vorrichtung nach einem der Ansprüche 1 bis 12, **dadurch gekennzeichnet, dass** sie mit einer Schwammrolle versehen ist.

16. Vorrichtung nach einem der vorhergehenden Ansprüche, **dadurch gegenzeichnet, dass** zumindest das Substrat (50) von einem mit einem Inertgas flutbaren Behältnis umgeben ist.

17. Vorrichtung nach einem der vorhergehenden Ansprüche, **dadurch gekennzeichnet, dass** die Folgefrequenz der einzelnen Dosiervorgänge zwischen 10 und 1000 pro Sekunde, vorzugsweise größenordnungsmäßig 100 pro Sekunde, beträgt.

18. Vorrichtung nach einem der vorhergehenden Ansprüche, **dadurch gekennzeichnet, dass** das Substrat (50) ganz oder teilweise aus Glas, Keramik, Kunststoff, insbesondere einem Polyolefin wie z.B. Polypropylen, Polyethylen, Polymethylpenten, Polychlortrifluorethylen, Polytetrafluorethylen, Polyvinylidenfluorid, Ethylen-Vinylacetat-Copolymer oder Ethylen-Vinyl-Alkohol-Copolymer oder einer Mischung aus zwei oder mehreren dieser Stoffe, mit oder ohne Füllstoff, oder aus Zellulose und in Folien-, Platten-, Membran- oder Faservliesform, besteht.

19. Vorrichtung nach einem der vorhergehenden Ansprüche, **dadurch gekennzeichnet, dass** die einzelnen Elemente (54) aus von vorneherein oder mittels des Dosierkopfes bzw. der Dosierköpfe (64) darauf aufgebrachten Spots bestehen.

20. Vorrichtung nach einem der vorhergehenden Ansprüche, **dadurch gekennzeichnet, dass** die Struktur der einzelnen Element (54) zusammen mit ihrer jeweiligen Position auf dem Substrat (50) automatisch in einem Protokoll aufgezeichnet wird.

## Claims

1. An apparatus for generating freely definable repertoires of elements (54) in the form of ligand and acceptor structures for combinatorial synthesis for example in active ingredient research, where the elements are arranged regularly along a first and a second coordinate (56 and 58, respectively) on a substrate (50) and can be approached under control singly by a metering head holder (62) which meters in the respective position a reagent or solvent onto the respective element (54), wherein the substrate (50) has the shape of a body able to rotate about its rotational symmetry axis (52) as axis of rotation in the direction of the first coordinate (56), and at least one metering head (64) can travel in relation to the substrate along the second coordinate (58) parallel to the surface of the substrate (50), and can be actuated depending on its particular instantaneous position to dispense a defined amount of the relevant reagent or solvent, **characterized in**
(i) that the rotational movement of the substrate (50) takes place continuously and not in shift steps which are adapted to the elements (54) arranged along the first coordinate (56) on the substrate (50),
(ii) that the travel movement of the metering head holder (62) takes place continuously and not in shift steps, which are adapted to the spacing of the elements (54) arranged on the second coordinate (58) on the substrate (50), and
(iii)that the second coordinate (58) follows a circled bow eccentrically to the rotational access (52) of the substrate (50).

2. An apparatus as claimed in claim 1, **characterized in that** a plurality - preferably between 2 and 100 and most expediently up to about 50 - metering heads (64) are arranged together and rigidly in a metering head holder (62) which in turn is capable of travel.

3. An apparatus as claimed in claim 2, **characterized in that** the metering heads (64) can be fed separately from different storage containers for the respective reagents and solvents.

4. An apparatus as claimed in claim 3, **characterized in that** at least some of the storage containers can be cooled.

5. An apparatus as claimed in any of the preceding claims, **characterized in that** between 2500 and 160000, preferably of the order of 10000, elements (54) are accommodated on the substrate.

6. An apparatus as claimed in any of the preceding claims, **characterized in that** the metering head or the metering heads (64) is or are designed for shot-like dispensation of the respective reagent or solvent.

7. An apparatus as claimed in claim 6, **characterized in that** the metering head or the metering heads (64) is or are designed to operate in the manner of an inkjet printer.

8. An apparatus as claimed in any of claims 1 to 7, **characterized in that** the substrate (50) is in the form of a disk.

9. An apparatus as claimed in any of the preceding claims, **characterized in that** it is provided with an application apparatus, which is independent of the metering head (64) or metering head holder (62), for applying a rising liquid or the like to the entire substrate (50) in situ.

10. An apparatus as claimed in claim 9, **characterized in that** the application apparatus has at least one application nozzle which can travel independently in relation to the substrate (50).

11. An apparatus as claimed in claim 9 in conjunction with claim 8, **characterized in that** the application apparatus has at least one application nozzle acting on the middle region of the substrate (50) in the form of a disk, and that an increased speed of rotation can be conferred on the substrate (50) during the action of this application nozzle.

12. An apparatus as claimed in any of claims 9 to 11, **characterized in that** it is provided with means for bringing about a forced drying of the substrate (50) in situ.

13. An apparatus as claimed in claim 12, **characterized in that** the substrate (50) can be rotated in a spin operation for the forced drying.

14. An apparatus as claimed in claim 12 or 13, **characterized in that** the substrate (50) can be heated and/or acted on by a gas - which is heated where appropriate.

15. An apparatus as claimed in any of claims 1 to 12, **characterized in that** it is provided with a sponge roll.

16. An apparatus as claimed in any of the preceding claims, **characterized in that** at least the substrate (50) is surrounded by a container which can be flushed with an inert gas.

17. An apparatus as claimed in any of the preceding claims, **characterized in that** the repetition rate of the individual metering processes is between 10 and 1000 per second, preferably of the order of 100 per second.

18. An apparatus as claimed in any of the preceding claims, **characterized in that** the substrate (50) consists wholly or partly of glass, ceramic, plastic, in particular a polyolefin such as, for example, polypropylene, polyethylene, polymethylpentene, polychlorotrifluoroethylene, polytetrafluoroethylene, polyvinylidene fluoride, ethylene/vinyl acetate copolymer or ethylene/vinyl alcohol copolymer or a mixture of two or more of these substances, with or without filler, or of cellulose and in the form of a sheet, plate, membrane or fiber web.

19. An apparatus as claimed in any of the preceding claims, **characterized in that** the individual elements (54) consist of spots which have been applied thereto from the outset or by means of the metering head or the metering heads (64).

20. An apparatus as claimed in any of the preceding claims, **characterized in that** the structure of the individual elements (54) together with their respective position on the substrate (50) is automatically recorded in a record.

## Revendications

1. Dispositif pour générer des répertoires librement définissables d'éléments (54) sous la forme de structures de ligands et d'accepteurs pour la synthèse combinatoire, par exemple dans la recherche de principes actifs, les éléments étant disposés de manière régulière sur un substrat (50), le long d'une première et d'une seconde coordonnée (56 et 59) et pouvant être atteints individuellement de manière contrôlée par un porte-tête de dosage (62) qui, dans la position concernée applique une quantité dosée d'un réactif ou d'un solvant sur l'élément concerné (54), le substrat (50) étant conformé en corps de révolution tournant autour de son axe de symétrie de rotation (52) comme axe de rotation dans la direction de la première coordonnée (56), et au moins une tête de dosage (64) se déplaçant en vis-à-vis de la surface du substrat (50) le long de la seconde coordonnée (58), parallèlement audit substrat (50) et en fonction de position instantanée, étant commandé pour délivrer une quantité déterminée du réactif ou du solvant concerné , **caractérisé en ce que**
i. le mouvement de rotation du substrat (50) a lieu de manière continue, et non par pas d'avance adaptés à l'espacement des éléments (54) disposés sur le substrat (50), le long de la première coordonnée (56),
ii. le mouvement de déplacement du porte-tête de dosage (62) a lieu de manière continue, et non par pas d'avance adaptés à l'espacement des éléments (54) disposés sur le substrat (50), le long de la seconde coordonnée (58),
iii. **en ce que** la seconde coordonnée (58) suit un arc de cercle excentrique par rapport à l'axe de rotation (52) du substrat (50).

2. Dispositif selon la revendication 1, **caractérisé en ce que** plusieurs, de préférence entre 2 et 100, et de manière préférentielle jusqu'à 50, têtes de dosage (64) sont disposées conjointement et de manière fixe dans un porte-tête de dosage (62) mobile.

3. Dispositif selon la revendication 2, **caractérisé en ce que** les têtes de dosage (64) peuvent être alimentées séparément à partir de différentes cuves de stockage pour les réactifs et les solvants concernés.

4. Dispositif selon la revendication 3, **caractérisé en ce qu'**au moins certaines cuves de stockage peuvent être réfrigérées.

5. Dispositif selon une des revendications précédentes, **caractérisé en ce qu'**entre 2.500 et 150.000, de préférence de l'ordre de 10.000 éléments (54) peuvent être disposés sur le substrat.

6. Dispositif selon une des revendications précédentes, **caractérisé en ce que** la tête de dosage ou les têtes de dosage (64) est/sont agencée(s) pour délivrer par jets brefs le réactif ou le solvant concerné.

7. Dispositif selon la revendication 6, **caractérisé en ce que** la tête de dosage ou les têtes de dosage (64) fonctionnent à la manière d'une imprimante à jet d'encre.

8. Dispositif selon une des revendications 1 à 7, **caractérisé en ce que** le substrat (50) a une forme de disque.

9. Dispositif selon une des revendications précédentes, **caractérisé en ce qu'**il comporte un dispositif d'application indépendant de la tête de dosage ou des têtes de dosage (64), pour appliquer un liquide de rinçage ou similaire sur l'ensemble du substrat (50) in situ.

10. Dispositif selon la revendication 9, **caractérisé en ce que** le dispositif d'application comporte au moins une buse d'application qui peut être déplacée de manière autonome par rapport au substrat (50)

11. Dispositif selon la revendication 9, **caractérisé en ce que** le dispositif d'application comporte au moins une buse d'application qui agit sur la région médiane du substrat (50) en forme de disque, et **en ce qu'**une vitesse de rotation accélérée peut être appliquée au substrat pendant l'activité de ladite buse d'application.

12. Dispositif selon une des revendications 9 à 11, **caractérisé en ce qu'**il comporte des moyens pour effectuer un séchage forcé du substrat (50) in situ.

13. Dispositif selon la revendication 12, **caractérisé en ce que** le substrat (50), pour le séchage forcé, peut être soumis à une centrifugation.

14. Dispositif selon la revendication 12 ou 13, **caractérisé en ce que** le substrat (50) peut être chauffé et/ou baigné par un gaz - éventuellement chauffé -.

15. Dispositif selon une des revendications 1 à 12, **caractérisé en ce qu'**il est muni d'un rouleau éponge.

16. Dispositif selon une des revendications précédentes, **caractérisé en ce qu'**au moins le substrat (50) est entouré d'un contenant pouvant être rempli par un gaz inerte.

17. Dispositif selon une des revendications précédentes, **caractérisé en ce que** la séquence des différentes opérations de dosage est comprise dans une plage allant de 10 à 100 par seconde, de préférence est de 100 par seconde.

18. Dispositif selon une des revendications précédentes, **caractérisé en ce que** le substrat (50) est entièrement ou partiellement en verre, en céramique, en matière plastique, en particulier en une polyoléfine, telle que par exemple du polypropylène, du polyéthylène, du polyméthylpentène, du polychlorotrifluoréthylène, un copolymère éthylène-vinylacétate ou un copolymère éthylène-vinyle-alcool ou en un mélange de deux ou plus de ces substances, avec ou sans charge, ou en cellulose, sous forme de feuille, de plaque, de membrane ou de mat de fibres.

19. Dispositif selon une des revendications précédentes, **caractérisé en ce que** les différents éléments (54) sont formés d'origine ou par des plots appliqués sur le substrat par la tête ou les têtes de dosage (4).

20. Dispositif selon une des revendications précédentes, **caractérisé en ce que** la structure des différents éléments (54) ainsi que leur position sur le substrat (50) sont enregistrés de manière automatique dans un protocole.
